**Europäisches Patentamt**

**European Patent Office**

**Office européen des brevets**

(19)

(11) Numéro de publication: **0 005 393**
**A1**

(12) # DEMANDE DE BREVET EUROPEEN

(21) Numéro de dépôt: **79400262.6**

(22) Date de dépôt: **24.04.79**

(51) Int. Cl.²: **G 01 T 1/02, C 23 C 7/00**

(30) Priorité: **27.04.78 FR 7812511**

(43) Date de publication de la demande: **14.11.79**
**Bulletin 79/23**

(84) Etats contractants désignés: **CH DE GB IT**

(71) Demandeur: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Ducos, Maurice, Route d'Uchaux - Mornas, F-84420 Piolenc (FR)**
Inventeur: **Manfredi, Pierre, Quartier Saint Marcel - Serignan, F-84100 Orange (FR)**
Inventeur: **Petel, Maurice, 41, rue Fontaine Grelot, F-92340 Bourg-La-Reine (FR)**
Inventeur: **Portal, Guy, 16, Résidence du Parc, F-91300 Massy (FR)**

(74) Mandataire: **Mongredien, André et al, c/o Brevatome 25, rue de Ponthieu, F-75008 Paris (FR)**

(54) **Procédé de fabrication de plaquettes sensibles pour dosimètres à électrons.**

(57) Procédé de réalisation d'une plaquette sensible pour dosimètre à exoélectrons par réalisation sur un support d'un dépôt d'un mélange de deux composés constitués, d'une part, par un corps comportant des pièges pour les électrons et apte à émettre des exoélectrons par stimulation thermique ou optique et, d'autre part, par un corps présentant une bonne conductivité ionique.

Le procédé comprend les étapes suivantes:
– on réalise un mélange homogène des poudres constituant les deux composés; et
– on projette ledit mélange de poudres à l'aide d'un dispositif de projection par atomisation pour obtenir un dépôt adhérant sur ledit support.

De préférence, ledit procédé comporte une étape ultérieure de traitement thermique du dépôt adhérant à une température comprise entre 300 et 900° C.

1

La présente invention due aux travaux de Messieurs Maurice DUCOS et Pierre MANFREDI de la Société de Fabrication d'Eléments catalytiques et de Messieurs Maurice PETEL et Guy PORTAL du Commissariat à l'Energie Atomique a pour objet un procédé de réalisation de plaquettes sensibles pour dosimètres à exoélectrons.

Les détecteurs à exoélectrons sont maintenant bien connus. On sait qu'une plaquette réalisée avec certains matériaux cristallins, lorsqu'elle est soumise à une irradiation, voit ses électrons transférés de la bande de valence à la bande de conduction du réseau cristallin. Une certaine proportion de ces électrons est capturée dans les pièges du réseau cristallin, pièges qui sont dus soit à des impuretés du cristal, soit à d'autres défauts du réseau cristallin. Pour libérer les électrons de ces pièges, il faut apporter de l'énergie au réseau cristallin. Ce processus d'apport d'énergie appelé stimulation peut être d'origine optique ou thermique. En mesurant la quantité des électrons qui sont ainsi libérés et qui seront ultérieurement appelés exoélectrons, on peut en déduire la dose d'irradiation absorbée préalablement par l'échantillon. Les électrons libérés par le cristal au cours de la stimulation sont détectés et mesurés par un lecteur d'exoélectrons lors du phénomène d'émissions exoélectroniques stimulées. Par exemple, cette émission d'exoélectrons est mesurée à l'aide d'un compteur Geiger-Müller à circulation gazeuse ou encore par un multiplicateur d'électrons sans fenêtre.

Dans la demande de brevet français déposée le 17 septembre 1976 au nom du Commissariat à l'Energie Atomique pour "matériaux pour la réalisation de détecteurs à exoélectrons" on a décrit des matériaux particulièrement bien adaptés

B. 6452.3 GD

2

pour constituer la plaquette sensible d'un appareil de dosage d'un rayonnement par émission d'exoélectrons, cet appareil étant communément appelé dosimètre.

Dans le brevet précédemment cité qui fait partie intégrante de la présente description, on a décrit et revendiqué le fait que le matériau pour réaliser la plaquette sensible du dispositif de mesure de rayonnement par émission d'exoélectrons se caractérisait en ce qu'il comprend un premier corps comportant des pièges pour les électrons et susceptible d'émettre des exoélectrons par stimulation thermique ou optique et un deuxième corps présentant une bonne conductivité ionique et apte à donner un matériau solide. De préférence, le deuxième corps est de l'alumine ayant cristallisé en phase β. Egalement de préférence, le premier corps est choisi dans le groupe comprenant l'alumine α et l'oxyde de béryllium. Cependant, le premier corps peut être également choisi dans le groupe comprenant : $SO_4Ca$ ; $SO_4Ba$ ; $CaF_2$ ; $SO_4Sr$ et $FLi$.

En fait, la plaquette sensible du dosimètre est constituée par le dépôt d'un corps ou, plus précisément, du mélange de corps défini ci-dessus sur un support.

La présente invention a précisément pour objet un procédé pour réaliser le dépôt du mélange de corps sur la plaquette, ce dépôt étant conforme à celui qui a été décrit dans la demande de brevet déjà citée.

D'une façon générale, le support sur lequel on peut effectuer le dépôt de la composition de corps présentant des propriétés exoélectroniquesest constitué soit par une pièce métallique, soit par une pièce en céramique.

Pour réaliser un dépôt de ce type, on a déjà envisagé le procédé suivant :

Le mélange de deux corps présentant chacun les propriétés définies précédemment et, par exemple, le mélange des deux types d'alumine (α et β) consiste à réaliser une pastille à l'aide du mélange des deux types d'alumine et à effectuer ensuite l'opération de frittage. Cependant, au cours de cette opération, des difficultés surgissent causées

B. 6452.3 GD

3

par la détérioration de la conduction ionique aux températures avoisinant 1000°C. Or, normalement le frittage s'effectue à des températures de l'ordre de 1600 à 1800°C. On pourrait certes éliminer cet inconvénient en effectuant le frittage en atmosphère sodique soigneusement contrôlée. Cependant, ce procédé est très délicat à mettre en oeuvre.

C'est pourquoi la présente invention a pour objet un procédé dont la mise en oeuvre est plus simple et qui permet cependant de réaliser le dépôt du mélange de corps convenable sur une plaquette, ce dépôt étant solide, adhérant bien au support et présentant des caractéristiques mécaniques intéressantes, sans utiliser de frittage de la poudre.

Le procédé de réalisation d'une plaquette sensible pour dosimètre à exoélectrons par réalisation sur un support d'un dépôt d'un mélange de deux composés se caractérise en ce qu'il comprend les étapes suivantes :
- on réalise un mélange homogène des poudres constituant les deux composés ; et
- on projette ledit mélange de poudres à l'aide d'un dispositif de projection par atomisation pour obtenir un dépôt adhérant sur ledit support.

Selon un premier mode de mise en oeuvre, on crée à l'aide d'un chalumeau à plasma d'arc un jet de plasma à proximité du support sur lequel on veut réaliser le dépôt, et on projette ledit mélange de poudres sous forme pulvérulente dans ledit jet pour obtenir le dépôt adhérant sur ledit support.

Selon un deuxième mode de mise en oeuvre, on utilise comme dispositif de projection par atomisation un chalumeau à flamme chimique et on projette ledit mélange de poudres sous forme pulvérulente dans ladite flamme pour obtenir ledit dépôt adhérant sur ledit support.

Selon un troisième mode de mise en oeuvre, on réalise ledit mélange homogène de poudre sous forme d'une baguette ou d'un cordon et on utilise comme dispositif de projection un chalumeau à fil et à flamme chimique.

B 6452.3 GD

4

De préférence, on réalise ensuite un traitement thermique du dépôt à une température comprise entre 300 et 900°C. Cependant, si l'un des composés est l'alumine β, ce traitement thermique peut avoir lieu jusqu'à une température de l'ordre de 1200°C si le dépôt est maintenu dans une ambiance gazeuse de sodium.

De préférence, lesdites poudres ont une granulométrie de l'ordre de 5 microns.

L'invention concerne également une plaquette sensible pour dosimètre à exoélectrons obtenue en particulier mais non exclusivement par la mise en oeuvre du procédé précédent selon ses différentes variantes. La plaquette se caractérise en ce qu'elle est constituée par un mélange d'un corps comportant des pièges pour les électrons et d'un corps présentant une bonne conductivité ionique.

De préférence, ce mélange est constitué par l'alumine α et l'alumine β. Cependant, l'alumine α peut être remplacée par un des corps cités précédemment.

De toute façon, la présente invention sera mieux comprise à la lecture de la description qui suit d'un exemple de mise en oeuvre du procédé objet de l'invention. La description se réfère aux figures annexées sur lesquelles on a représenté :

- sur la figure 1, une vue en coupe verticale d'un dispositif pour réaliser la projection et le dépôt du mélange présentant les caractéristiques exoélectroniques ;

- sur les figures 2 et 3, des courbes montrant les résultats obtenus avec des détecteurs ou dosimètres dont la plaquette sensible a été réalisée en conformité avec le procédé objet de l'invention.

Comme on l'a déjà indiqué, le procédé consiste à réaliser un dépôt d'épaisseur constante sur une plaquette, ce dépôt étant constitué par deux composants principaux présentant les caractéristiques déjà indiquées, ce dépôt ayant des propriétés mécaniques convenables et adhérant à la plaquette de façon sûre et durable.

5

Selon le premier mode de mise en oeuvre, le procédé comporte les étapes suivantes :

- dans une première étape, on prépare le support en nettoyant sa surface soit par attaque chimique, soit par sablage. A la suite de cette opération, la plaquette est prête à recevoir le dépôt. Pour effectuer ce dépôt, on réalise une poudre homogène des deux constituants de ce dépôt, (par exemple de l'alumine β et de l'alumine α) qui, pour des raisons d'homogénéité, présentent la même granulométrie, celle-ci étant de préférence de l'ordre de 5 microns. Lorsque ce mélange a été mélangé, on projette cette poudre sur la plaquette de façon à obtenir une épaisseur de dépôt correcte et une bonne homogénéité. Pour cela, on projette la poudre dans la flamme d'un chalumeau à plasma à arc soufflé. Ce mode de chauffage de la poudre permet d'obtenir des températures maximales de l'ordre de 15 000°C, ce qui assure une très bonne qualité de dépôt.

Le revêtement du support ainsi obtenu a une épaisseur comprise entre 10 et 100 microns.

De préférence, après la réalisation de la plaquette, on soumet celle-ci à un traitement thermique à une température comprise entre 300 et 900°C. La limite supérieure a pour but d'éviter une altération des propriétés de conductivité ionique du deuxième corps, cette altération se produisant à une température voisine de 1000°C.

Cependant, dans le cas où le deuxième corps est de l'alumine β, il peut être intéressant d'effectuer le traitement thermique à une température supérieure qui peut aller jusqu'à 1200°C. Il est nécessaire alors de pratiquer ce traitement thermique dans une ambiance saturée en sodium. Cela évite le départ des ions sodium de l'alumine β, cette impureté donnant en effet les propriétés de conduction ionique. Il faut cependant observer que, même dans ce cas, on reste nettement en dessous des gammes de températures correspondant au procédé par frittage.

6

Ce traitement thermique a pour but d'éliminer les phénomènes de tribo-excitation créés lors du processus de projection du mélange pulvérulent sur la plaquette support.

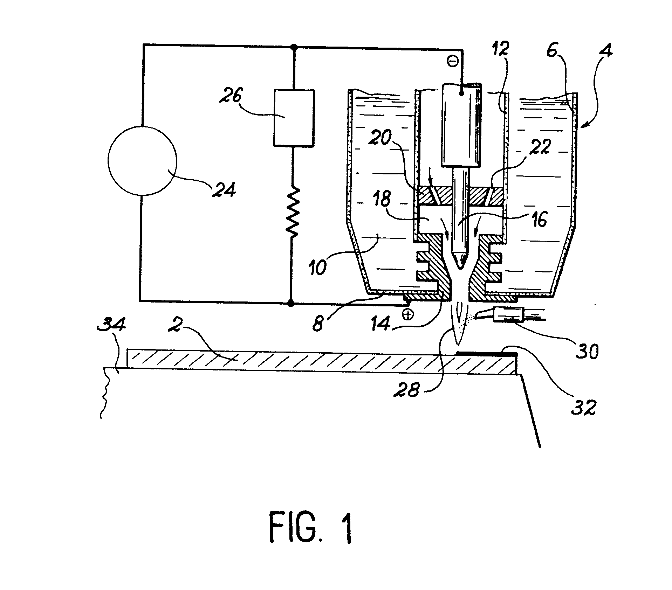

En se référant à la figure 1 annexée, on va décrire plus en détail le chalumeau à plasma qui permet d'effectuer pratiquement le dépôt. Sur cette figure, on a représenté la plaquette 2 à revêtir du dépôt présentant les propriétés exoélectroniques. Le chalumeau à plasma du type à arc soufflé consiste à dissocier un gaz dans un arc électrique et, ensuite, à utiliser l'énergie ou la température obtenue par la recombinaison de ce gaz. La constriction imposée à l'arc dans le chalumeau permet d'atteindre des températures élevées allant jusqu'à 15 000°C.

Le chalumeau proprement dit 4 comporte un embout 6 constitué par une paroi creuse 8 dans laquelle peut circuler un fluide de refroidissement tel que de l'eau. Dans l'alésage 12 ménagé par la paroi 8, on trouve à son extrémité inférieure une buse 14 qui définit la forme de la flamme. Cette buse 14 est réalisée en un matériau électrique conducteur qui est en même temps réfractaire. Cette buse 14 constitue l'anode du dispositif. A l'intérieur de l'alésage 12, on trouve une cathode 16 en forme de tige et disposée selon l'axe de l'alésage 12. L'alésage 12 est partagé en une région supérieure et une région inférieure 18 par une cloison horizontale 20 munie d'ajutages 22. Le gaz servant à créer l'élévation de température est injecté dans le compartiment inférieur 18 par les ajutages 22. L'ionisation du gaz est obtenue à l'aide des électrodes 14 et 16. Pour cela, ces électrodes sont reliées aux deux bornes d'une source d'énergie électrique 24. Le circuit électrique comporte un générateur HF 26 qui permet d'amorcer l'arc électrique qui lui, bien sûr, est continu. Plus précisément et de préférence, la cathode 16 est réalisée en tungstène torié alors que l'anode est réalisée en cuivre et refroidie par la circulation de l'eau dans le corps creux 8. On a symbolisé par 28 le jet de plasma à l'extérieur de la buse 14. Le dispositif comprend également une arrivée de poudre 30 dont l'ouverture est dirigée vers le jet de plasma 28.

B 6452.3 GD

7

Ce mode de projection présente les avantages suivants: on obtient un jet de plasma à vitesse très élevée. Il est possible ainsi d'utiliser des poudres très fines projetées à grande vitesse et séjournant un temps très court dans le jet de plasma. De cette manière, on obtient un dépôt qui conserve en grande partie les caractéristiques du matériau initial, c'est-à-dire de la poudre, une bonne cohésion des particules et, en conséquence, une faible porosité du dépôt 32 réalisé sur la plaquette 2. Bien entendu, la plaquette 2, sur laquelle on veut réaliser le dépôt est fixée sur un support mobile 34 qui peut se déplacer vis-à-vis de la buse 14 afin de réaliser la totalité du dépôt. Par exemple, le support peut être un "carrousel", c'est-à-dire que ce support 34 tourne de manière uniforme , de manière à passer alternativement devant le jet de plasma 28. Enfin, on peut régler la distance entre la buse 14  et le support 34 afin de régler les paramètres de projection.

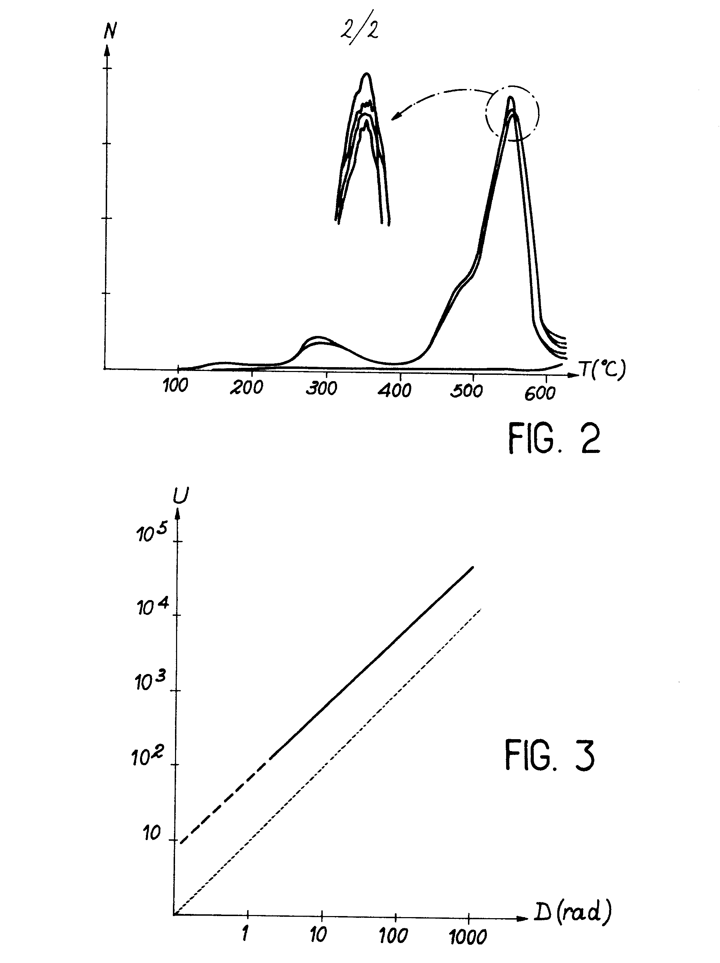

Sur la figure 2, on a représenté une courbe qui illustre les caractéristiques d'une plaquette sensible obtenue par projection du mélange alumine $\alpha$ et alumine $\beta$ par le mode de mise en oeuvre du procédé précédemment décrit. Il faut préciser que le revêtement ainsi obtenu présente une excellente résistance mécanique et qu'il est pratiquement indestructible. En outre, les propriétés dosimétriques du mélange d'alumine sont conservées. Plus précisément, la structure cristalline des composés d'origine n'est pas modifiée.

La figure 2 représente des courbes caractéristiques d'électrons thermostimulés. Elles sont représentatives de la dose intégrée par le dosimètre utilisant la plaquette sensible. Sur cette courbe, on a représenté en abscisse les températures T et en ordonnées N le nombre d'exoélectrons émis par seconde. La plaquette sensible est soumise à une dose constante de 20 Rad. L'écart type calculé sur huit mesures est de plus ou moins 3,8 %. D'autre part, l'écart type des mesures faites avec un lot de plaquettes sensibles irradié avec la

B 6452.3 GD

8

même dose est de l'ordre de 8 %. On constate donc qu'on obtient effectivement par ce procédé des plaquettes sensibles de grande qualité et de bonne reproductibilité. La courbe horizontale inférieure représente le bruit de fond, c'est-à-dire la réponse du dosimètre non irradié.

Sur la figure 3, on a représenté la réponse (en unités arbitraires U) en fonction de la dose D dans une gamme de dose allant de 1 à 600 Rad. Tous ces résultats représentés sur la figure 3 sont en concordance avec ceux qui sont obtenus à partir des plaquettes sensibles se présentant sous forme de poudre.

Ces résultats montrent que malgré la température mise en oeuvre de façon simple lors de la réalisation de la plaquette, on conserve, grâce au procédé décrit, les propriétés initiales des deux corps intervenant dans le mélange.

Dans l'exemple précédent, on a envisagé le cas où le dépôt se faisait à l'aide d'un mélange d'alumine α et d'alumine β. Il va de soi qu'on ne sortirait pas de l'invention si le mélange comprenait comme premier corps les autres corps indiqués au début de la description, à savoir, par exemple, $SO_4Ca$ ; $SO_4Ba$ ; $CaF_2$ ; $SO_4Sr$ ou $FLi$.

La plaquette sensible ayant la composition indiquée précédemment a de préférence une épaisseur comprise entre 20 et 100 microns. Elle a, par exemple, la forme d'un disque dont le diamètre est de l'ordre de 18 mm. De plus, dans le cas du mélange alumine α, alumine β, on obtient une sensibilité de mesure de l'ordre de 100 millirads.

Comme on l'a déjà indiqué, on peut remplacer le chalumeau à plasma d'arc décrit précédemment par un chalumeau à flamme chimique et par exemple un chalumeau oxyacétylénique qui produit une température de flamme de l'ordre de 2 500°C. Ces chalumeaux peuvent être utilisés de deux manières différentes, soit le mélange homogène de poudres est réalisé sous forme d'une baguette ou d'un cordon souple par des procédés bien connus de l'homme de l'art.

9

Alors le chalumeau est du type à fil qui permet la projection par atomisation par avance de la baguette ou déroulement progressif du cordon ; soit le mélange homogène de poudre est réalisé sous forme pulvérulente comme dans le cas du chalumeau à plasma d'arc. On projette alors la poudre dans la flamme du chalumeau qui est également à flamme chimique et de préférence un chalumeau oxyacétylénique.

On trouvera ci-dessous deux exemples de mise en oeuvre de cette variante du procédé.

EXEMPLE 1

On utilise un chalumeau à fil à flamme chimique oxyacétylénique (mélange stoichiométrique). On part d'un cordon constitué par un mélange homogène de $SO_4Ba$ et $Al_2O_3\beta$. Le cordon comporte en outre éventuellement un liant et une gaine selon la technique connue de réalisation des cordons. La projection se fait par propulsion d'air à 4,5 bars.

Le support est en acier inoxydable sablé.

EXEMPLE 2

On emploie un chalumeau à poudre. On projette le mélange $Al_2O_3\,\alpha + Al_2O_3\,\beta$. Il s'agit d'un chalumeau à flamme chimique oxyacétylénique (mélange stoichiométrique). Le dépôt est effectué sur un support en acier inoxydable sablé.

Cette variante du procédé permet d'obtenir des plaquettes sensibles, ayant les mêmes propriétés que celles qui sont obtenues par un chalumeau à plasma d'arc.

10

## REVENDICATIONS

1. Procédé de réalisation d'une plaquette sensible pour dosimètre à exoélectrons par réalisation sur un support d'un dépôt d'un mélange de deux composés constitués, d'une part, par un corps comportant des pièges pour les électrons et apte à émettre des exoélectrons par stimulation thermique ou optique et, d'autre part, par un corps présentant une bonne conductivité ionique, caractérisé en ce qu'il comprend les étapes suivantes :

- on réalise un mélange homogène des poudres constituant les deux composés ; et

- on projette ledit mélange de poudres à l'aide d'un dispositif de projection par atomisation pour obtenir un dépôt adhérant sur ledit support.

2. Procédé selon la revendication 1, caractérisé en ce qu'on crée à l'aide d'un chalumeau à plasma d'arc un jet de plasma à proximité du support sur lequel on veut réaliser le dépôt, et on projette ledit mélange de poudres sous forme pulvérulente dans ledit jet pour obtenir le dépôt adhérant sur ledit support.

3. Procédé selon la revendication 1, caractérisé en ce qu'on utilise comme dispositif de projection par atomisation un chalumeau à flamme chimique, et en ce qu'on projette ledit mélange de poudres sous forme pulvérulente dans ladite flamme pour obtenir ledit dépôt adhérant sur ledit support.

4. Procédé selon la revendication 1, caractérisé en ce qu'on réalise ledit mélange homogène de poudre sous forme d'une baguette ou d'un cordon, et en ce qu'on utilise comme dispositif de projection un chalumeau à fil et à flamme chimique.

5. Procédé selon l'une quelconque des revendications 1 à 4, caractérisé en ce qu'il comporte en outre une étape ultérieure de traitement thermique du dépôt adhérant à une température comprise entre 300 et 900°C.

6. Procédé selon l'une quelconque des revendications 1 à 4, caractérisé en ce qu'il comporte en outre

B 6452.3 GD

11

une étape ultérieure de traitement thermique du dépôt adhérant à une température comprise entre 300 et 1200°C en ambiance saturée en sodium, ledit deuxième corps étant l'alumine β .

7. Procédé selon l'une quelconque des revendications 1 à 6, caractérisé en ce que lesdites poudres ont une granulométrie de l'ordre de 5 microns.

8. Procédé selon l'une quelconque des revendications 1, 2, 3, 4, 6 et 7, caractérisé en ce que le deuxième composé est de l'alumine ayant cristallisé en phase β, et en ce que le premier composé est de l'alumine α ou de l'oxyde de béryllium.

9. Procédé selon l'une quelconque des revendications 1, 2, 3, 4, 5 et 7, caractérisé en ce que le premier corps est choisi dans le groupe comprenant $SO_4Ca$ ; $SO_4Ba$ ; $CaF_2$ ; $SO_4Sr$ et FLi.

10. Procédé selon la revendication 2, caractérisé en ce qu'on place ledit support sur une table pour régler la distance de projection et pour déplacer ledit support par rapport audit jet de plasma.

11. Dispositif pour dosimètre à exoélectrons, caractérisé en ce qu'il comprend un support et sur ce support une plaquette sensible adhérant audit support, ladite plaquette étant constituée par un mélange d'un corps comportant des pièges pour des électrons et apte à émettre des exoélectrons par stimulation thermique ou optique et par un corps présentant une bonne conductivité ionique.

12. Dispositif selon la revendication 11, caractérisé en ce que lesdits corps sont respectivement l'alumine α et l'alumine β.

13. Dispositif selon la revendication 11, caractérisé en ce que lesdits corps sont respectivement un corps choisi dans le groupe comprenant BeO ; $SO_4Ca$ ; $SO_4Ba$ ; $CaF_2$ ; $SO_4Sr$ et FLi et l'alumine β.

ORIGINAL : Par procuration du :
COMMISSARIAT A L'ENERGIE ATOMIQUE
DRONNE GUY

B 6452.3 GD

FIG. 1

00005393

2/2

FIG. 2

FIG. 3

# RAPPORT DE RECHERCHE EUROPEENNE

Office européen des brevets

Numéro de la demande
EP 79 40 0262

| DOCUMENTS CONSIDERES COMME PERTINENTS | | | CLASSEMENT DE LA DEMANDE (Int. Cl.²) |
|---|---|---|---|
| Catégorie | Citation du document avec indication, en cas de besoin, des parties pertinentes | Revendication concernée | |
| | SPACEFLIGHT, Vol. 9, no.2, février 1967, LONDRES (GB) W.M. WHEILDON: "Flame-sprayed ceramics coatings in space technology" pages 55-62 et 68 | 1-4 | G 01 T 1/02 C 23 C 7/00 |
| | * page 55, colonne de droite, lignes 9-25 * | | |
| | --- | | |
| | FR - A - 2 224 991 (ETAT FRANCAIS ET SOCIETE DESMARQUET ET C.E.C.) | 10 | DOMAINES TECHNIQUES RECHERCHES (Int. Cl.²) |
| | * page 3, ligne 27 à page 4, ligne 10 * | | G 01 T 1/02 B 05 B 7/22 B 05 B 7/20 |
| | --- | | |
| | FR - A - 2 365 134 (C.E.A.) | 8,9, 11-13 | |
| | * revendications 1-4 * | | |
| | --------- | | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 30-07-1979 | ARMSPACH |

OEB Form 1503.1  06.78